# EUROPÄISCHE PATENTSCHRIFT

(11) **EP 1 054 130 B1**
(45) Veröffentlichungstag und Bekanntmachung des Hinweises auf die Patenterteilung: **19.05.2004**
(21) Anmeldenummer: 00105743.9
(22) Anmeldetag: 17.03.2000
(51) Int. Cl.: E06B 3/96, B29C 65/56

(54) **Eckverbinder für Tür- oder Fenster-Hohlprofile**
Corner joint for hollow profiles of doors or windows
Joint d'angle pour des profilés creux des portes ou fenêtres

(30) Priorität: 18.05.1999 DE 19922683
(43) Veröffentlichungstag der Anmeldung: 22.11.2000
(73) Patentinhaber: Grotefeld, Hans Dieter, D-32549 Bad Oeynhausen (DE)
(72) Erfinder: Grotefeld, Hans Dieter, D-32549 Bad Oeynhausen (DE)
(74) Vertreter: TER MEER STEINMEISTER & PARTNER GbR

(56) Entgegenhaltungen:
- EP-A- 0 288 756
- EP-A- 0 415 394
- EP-A- 0 940 549
- DE-C- 4 429 709
- DE-U- 9 113 235

## Beschreibung

Die Erfindung betrifft einen Eckverbinder für Tür- oder Fenster-Hohlprofile gemäß dem Oberbegriff des Anspruchs 1.

Bei der Verbindung von auf Gehrung geschnittenen Hohlprofilen für Tür- und Fensterrahmen, insbesondere Hohlprofilen aus schweißbarem Kunststoff, werden in die beiden zusammenstoßenden Hohlprofile sogenannte Eckverbinder eingeschoben, die einen in die Hohlprofile eintretenden Schaft und eine der Gehrungsebene der beiden Hohlprofile entsprechende schräge Schweißfläche aufweisen. Durch Verschweißen der beiden Eckverbinder erlangt die Verbindung der Hohlprofile die gewünschte Steifigkeit und Stabilität.

Zur Festlegung der Eckverbinder in den Hohlprofilen werden die Eckverbinder bei den bekannten Lösungen auf verschiedene Weise gespreizt und damit verspannt. Auf diese Weise ist es nicht notwendig, Befestigungsmittel, wie etwa Schrauben, von der Außenseite der Hohlprofile her einzubringen. Bei einigen bekannten Lösungen wird ein in Längsrichtung des Schafts auf einer schrägen Führungsfläche des Schafts verschiebbarer Keil verwendet, durch dessen Längsverschiebung es zu einer Erweiterung der Anordnung aus Schaft und Keil kommt, die eine Verspannung in dem Hohlprofil bewirkt. Ein Beispiel für einen derartigen Stand der Technik zeigt das DE 91 13 235 U1. Bei dieser Ausführungsform weist der Keil eine aus der Schweißfläche des Eckverbinders herausragende Verlängerung auf, so daß der Keil durch Hammerschläge auf die Verlängerung in Längsrichtung verschoben werden kann.

Bei anderen Ausführungsformen wird der Keil nicht in das Hohlprofil hineingeschoben, sondern aus diesem herausgezogen. Dies zeigt beispielsweise die EP 415 394 A2 des Anmelders. Nach dieser Druckschrift wird der Keil mit Hilfe einer Schraube, deren Kopf in einer Vertiefung der Schweißfläche liegt, in Richtung auf das offene Ende des Hohlprofils gezogen, bis die Anordnung aus Schaft und Keil fest im Hohlprofil verspannt ist. Dem gleichen Prinzip folgt die in der DE 44 29 709 C 1 beschriebene Lösung, bei der der Keil eine angeformte, aus der Schweißfläche austretende Verlängerung aufweist, die mit einem Zugwerkzeug von außen erfaßt und in Richtung der Schweißfläche gezogen werden kann, so daß der Keil gespannt wird. Wenn die gewünschte Verspannung erreicht ist, soll die aus der Schweißfläche herausragende Verlängerung des Keils abgeschnitten oder abgebrochen werden.

Dieser in der DE 44 29 709 beschriebene Eckverbinder hat den Vorteil, daß er verhältnismäßig kostengünstig herstellbar ist, da die Verlängerung des Keils, die mit einem Zugwerkzeug erfaßt wird, unmittelbar bei Herstellung des Keils angespritzt werden kann. Es ist im übrigen nicht notwendig, eine zusätzliche Schraube zu verwenden, die einige zusätzliche Arbeitsgänge bei der Herstellung und der Montage des Eckverbinders erfordert und somit die Herstellung verteuert. Andererseits hat der bekannte Eckverbinder den Nachteil, daß der Keil auf der Außenfläche des Schafts aufliegt und damit mit seiner äußeren Oberfläche unmittelbar gegen das Innere des Hohlprofils anliegt. Bei Hohlprofilen aus Kunststoff ist es üblich, zur zusätzlichen Versteifung ein Vierkant-Hohlprofil aus Stahl einzuziehen. In diesen Fällen liegt der Eckverbinder innerhalb dieses Stahl-Hohlprofils. Beim Spannen des Keils reibt somit dessen äußere Oberfläche an der Innenfläche des Stahl-Hohlprofils. Diese innere Oberfläche kann aber eine sehr unterschiedliche Rauigkeit aufweisen, so daß der Verarbeiter nur ungenau feststellen kann, ob die ausreichende Verspannung erreicht ist oder der Keil durch die Rauigkeit des Stahlprofils gebremst wird. Selbst bei Verwendung eines Werkzeugs mit integrierter Zugkraftmessung, das jedoch nicht vorgesehen ist, wären daher zuverlässige Rückschlüsse auf die erreichte Verspannung nicht möglich. Im übrigen muß insbesondere beim Einsatz von ungeschultem Personal damit gerechnet werden, daß die aus der Schweißfläche herausragende Verlängerung des Keils nicht vollständig bis auf die Schweißfläche entfernt wird. Beim Einführen eines Schweißschwertes zwischen die beiden Eckverbinder wird daher Druck auf den verbliebenen Restbestandteil dieser Verlängerung ausgeübt, so daß der Keil möglicherweise wieder in das Hohlprofil hineingedrückt und die Verspannung gelöst wird.

Der Erfindung liegt daher die Aufgabe zugrunde, einen Eckverbinder der gattungsgemäßen Art zu schaffen, der gewährleistet, daß der Eckverbinder zuverlässig mit vorbestimmbarer Spannkraft im Hohlprofil verspannt wird.

Die Aufgabe der Erfindung wird bei einem gattungsgemäßen Eckverbinder gelöst durch die Merkmale des Patentanspruchs 1.

Erfindungsgemäß bildet der Spannkeil nicht die Außenfläche der Anordnung aus Schaft und Spannkeil, sondern er wird durch ein Abdeckteil abgedeckt, so daß der Spannkeil zwischen diesem Abdeckteil und dem Schaft liegt. Auf diese Weise gleitet der Spannkeil auf Gleitflächen mit definierter Rauigkeit, so daß die erreichte Zugkraft nicht von der wechselnden Rauigkeit der Innenfläche des Hohlprofils beeinflußt wird.

Ferner wird mit einem Werkzeug ein formschlüssig mit dem Keil verbundenes Zugglied erfaßt, dessen formschlüssige Verbindung so gestaltet ist, daß sie sich bei einer vorgegebenen Zugkraft löst. Auf diese Weise läßt sich die maximal erreichte Zugspannung relativ genau festlegen. Vorzugsweise liegt der Endbereich des Zuggliedes, der von dem Werkzeug erfaßt wird, in einer Vertiefung der Schweißfläche, in die ein Eingriffsglied des Werkzeugs hineingreifen kann. Auf diese Weise entfällt die bei der bekannten Lösung vorgesehene, über die Schweißfläche hinausragende Verlängerung des Spannkeils, die bei der Verpakkung und Lagerung des montierten Eckverbinders störend wirkt.

Das Zugwerkzeug wird mit einem Kopf auf der Gehrungsfläche des Hohlprofils abgestützt, und sobald das an dem Kopf vorgesehene Eingriffsglied das Zugglied erfaßt hat, wird auf das Zugglied eine Zugkraft ausgeübt, indem der Kopf mit Hilfe eines an dem Kopf angebrachten Hebelarms geschwenkt wird. Dabei bildet der Kopf zugleich einen Anschlag für den Eckverbinder, dessen Gehrungsfläche gegen den Kopf gezogen wird und damit vollständig bündig zu der Gehrungsebene des Hohlprofils liegt.

Bei dem erfindungsgemäßen Eckverbinder liegt der Spannkeil zwischen dem Schaft und einem Abdeckteil oder Außenteil des Eckverbinders. Vorzugsweise sind zwischen diesem Außenteil und dem Spannkeil korrespondierende Schrägflächen vorgesehen, die derart geneigt sind, daß eine Bewegung des Spannkeils in Richtung des offenen Endes des Hohlprofils eine Spreizung von Spannkeil und Schaft bewirkt. Wenn beispielsweise das Abdeckteil oben auf dem Spannkeil liegt, ist die Schrägfläche in Richtung des offenen Endes des Hohlprofils abwärts geneigt.

Auf diesen beiden Schrägflächen können korrespondierende Aufrauungen oder Rastmechanismen vorgesehen sein, die ein Zurückgleiten des Spannkeils verhindern. Andererseits ist die Gleitfläche, auf der der Spannkeil auf dem Schaft verschoben wird. parallel zur Längsachse des Schafts angeordnet.

Der erwähnte formschlüssige Eingriff zwischen dem Zugglied und dem Spannkeil ergibt sich vorzugsweise dadurch, daß das Zugglied an seinem dem Spannkeil zugewandten Ende T-förmig ausgebildet ist und in einer entsprechenden, T-förmigen Ausnehmung auf der Außenfläche des Spannkeils liegt. Das äußere Ende des Zuggliedes kann beispielsweise eine Öse umfassen, in die ein als Haken ausgebildetes Eingriffsglied am Kopf des Spannwerkzeugs eingreifen kann.

Der Kopf des Spannwerkzeugs kann beispielsweise aus zwei auf den seitlichen Rändern des Hohlprofils abstützbaren Rollen bestehen, die beiderseits eines Mittelstücks liegen, an dem einerseits das Eingriffsglied, beispielsweise der erwähnte Haken und andererseits der Hebelarm befestigt ist. Das Mittelstück kann gegenüber den Rollen leicht nach außen vorspringen, wenn beispielsweise gewünscht wird, daß der Eckverbinder mit seiner Schweißfläche nicht vollständig bündig auf der Gehrungsebene des Hohlprofils liegt. Eine derartige Anordnung wird vielfach deshalb bevorzugt, weil auf diese Weise das Schweißschwert zunächst die Kanten des Hohlprofils anlöst und erst dann die Schweißfläche des Eckverbinders erreicht.

Weitere Merkmale und Vorteile der Erfindung ergeben sich aus den Unteransprüchen.

Im folgenden werden bevorzugte Ausführungsbeispiele der Erfindung anhand der beigefügten Zeichnung näher erläutert.
- Fig. 1: ist ein Längsschnitt durch eine andere Ausführungsform des erfindungsgemäßen Eckverbinders mit angesetzten Werkzeug;
- Fig. 2: ist eine teilweise aufgeschnittene Draufsicht zu Fig. 1;

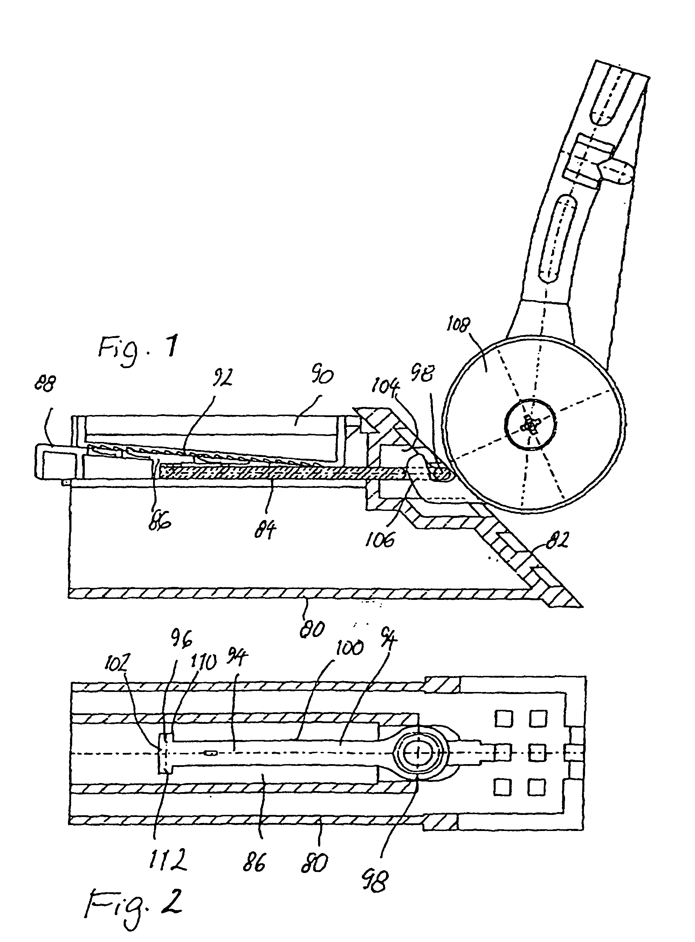

Anschließend soll eine Ausführungsform des erfindungsgemäßen Eckverbinders anhand von Fig. 1 und 2 beschrieben werden.

Fig. 1 zeigt einen Eckverbinder mit einem Schaft 80 und einer schrägen Schweißfläche 82. Der Schaft weist bei dieser Ausführungsform ein hohles Kastenprofil auf. In Längsrichtung des Schafts verläuft auf der oberen Seite in Fig. 1 eine in den Schaft abgesenkte Führung, deren Boden durch eine in Längsrichtung des Schafts verlaufende, achsparallele bzw. waagerechte Gleitfläche 84 gebildet wird. Auf dieser Gleitfläche 84 liegt ein Spannkeil 86, dessen obere Oberfläche als eine schräg von der rechts in Fig. 1 liegenden Schweißfläche 82 nach links in das nicht dargestellte Hohlprofil hinein ansteigende Keilfäche ausgebildet ist. Auf dem Keil liegt ein Abdeckteil 90, das einen T-förmigen Querschnitt aufweist. Dieses Abdeckteil 90 hat eine schräge untere Keilfläche, die entsprechend der schrägen Oberfläche 88 des Spannkeils 86 als eine nach links in das Hohlprofil hinein ansteigende untere Schrägfläche ausgebildet ist. Die beiden zusammenwirkenden Schrägflächen weisen eine Ratschenprofilierung 92 auf, die es gestattet, den Spannkeil 86 nach rechts in Fig. 1, also in Richtung der Schweißfläche 82 zu verschieben, in der Gegenrichtung jedoch eine relative Verschiebung von Spannkeil 86 und Abdeckteil 90 blockiert.

An dem Spannkeil 86 ist auf der oberen oder unteren Seite ein Zugglied 94 formschlüssig befestigt. Das Zugglied 94 weist an seinem links in Fig. 2 liegenden Ende ein T-förmiges Kopfstück 96 auf, während an das rechts in Fig. 2 liegenden, über den Spannkeil 86 hinausragenden Ende eine Öse 98 angeformt ist. Vorzugsweise handelt es sich bei diesem Zugglied 94 um ein Kunststoffteil. Auf der unteren oder oberen Oberfläche des Spannkeils 86 befindet sich eine Nut 100 mit einem flachen Rechteckquerschnitt, die vom rechts in Fig. 2 liegenden Ende des Keils eintritt und in einer T-förmigen Erweiterung 102 endet. Auf diese Weise ist die Form der Nut 100 an diejenige des Zuggliedes 94 angepaßt. Das Zugglied kann in diese Nut hineingedrückt werden. Wenn sich beispielsweise die Nut auf der unteren Seite des Spannkeils 86 befindet, liegt das Zugglied auf der Gleitfläche 84, so daß es durch die Gleitfläche 84 in dem Spannkeil 86 gehalten wird.

Die Öse 98 liegt in einer Vertiefung 104 in der Schweißfläche 82, wie aus Fig. 1 hervorgeht. Auf diese Weise kann sie durch das Eingriffsglied in der Form eines Hakens 106 eines Zugwerkzeugs 108 erfaßt werden. Mit dem Zugwerkzeug kann daher ein aus der Schweißfläche 82 herausgerichteter Zug auf das Zugglied 94 ausgeübt werden, durch den der Spannkeil 86 in Richtung der Schweißfläche 82 gezogen wird und die Anordnung aus Schaft 80 und Abdeckteil 90 gespreizt wird.

Dabei ist erkennbar, daß das Zugglied 94 aus der Nut nicht in Zugrichtung, d. h. nach rechts in Fig. 1 und 2 herausgezogen werden kann, da das T-förmige Kopfstück 96 in der Erweiterung 102 der Nut 100 liegt. Es ist jedoch möglich, durch geeignete Auswahl des Materials des Zuggliedes 100 und/oder des Spannkeiles 86 die dargestellte formschlüssige Verbindung so zu gestalten, daß sie sich bei einer relativ genau vorzugebenden Zugkraft durch Verformung der zusammenwirkenden Teile löst. Bei dem dargestellten Beispiel hat es sich in Versuchen gezeigt, daß bei einer vorgegebenen Zugkraft die beiden nach außen vorspringenden Ohren 110.112 des T-förmigen Kopfstücks 96 abgeschert werden, so daß das Zugglied aus der Nut nach rechts in Fig. 1 und 2 herausgezogen werden kann. Es löst sich damit von dem Spannkeil. Damit ist die vorgegebene Spannkraft erreicht. Der Spannkeil 86 ist fest verspannt und kann durch Selbsthemmung oder durch geeignete Ratschenprofilierung der zusammenwirkenden schrägen Oberflächen des Spannkeils 86 und des Abdeckteils 90 oder auch an dem Spannkeil und dem Schaft an einem eventuellen Zurückgleiten zusätzlich gehindert werden.

## Patentansprüche

1. Eckverbinder zum Einsetzen in ein auf Gehrung geschnittenes Türen- oder Fensterhohlprofil, insbesondere aus schweißbarem Kunststoff, beim Verbinden von zwei auf Gehrung geschnittenen Tür- oder Fensterhohlprofilen, mit einem in das Ende eines Hohlprofils einschiebbaren Schaft (80) mit im wesentlichen rechteckigem Querschnitt und einer den Schaft abschließenden, schräg zum Schaft verlaufenden Schweißfläche (82) sowie einem in Längsrichtung des Schafts verschiebbaren Spannkeil (86), der derart ausgebildet ist, daß der Eckverbinder durch Verschiebung des Spannkeils in Richtung der Schweißfläche (82) spreizbar ist, **dadurch gekennzeichnet, daß** der Spannkeil (86) zwischen dem Schaft (80) und einem Abdeckteil (90) des Eckverbinders liegt, daß an dem Spannkeil einerseits sowie dem Abdeckteil (90) andererseits korrespondierene Schrägflächen vorgesehen sind, derart, daß eine Verschiebung des Spannkeils (86) in bezug auf den Schaft (80) und das Abdeckteil (90) in Richtung der Schweißfläche (82) eine Spreizung der Anordnung aus Schaft (80) und Abdeckteil (90) bewirkt und daß an dem Spannkeil (86) ein in Richtung der Schweißfläche über den Spannkeil (86) hinausragendes Zugglied (94) formschlüssig befestigt ist, derart, daß bei einer vorgegebenen Zugspannung die vorgegebene Verbindung durch Verformung oder Bruch zerstört wird.

2. Verfahren nach Anspruch 1, **dadurch gekennzeichnet, daß** der Spannkeil (86) und das Abdeckteil (90 korrespondierende Schrägflächen aufweisen.

3. Verfahren nach Anspruch 2, **dadurch gekennzeichnet, daß** die korrespondierenden Schrägflächen von Spannkeil (86) und Abdeckteil (90) korrespondierende Ratschenprofilierungen (92) aufweisen.

4. Eckverbinder nach einem der Ansprüche 1 bis 3, **dadurch gekennzeichnet, daß** das der Schweißfläche (82) zugewandte Ende des Zuggliedes (94) in einer Vertiefung (104) der Schweißfläche liegt.

5. Eckverbinder nach einem der Ansprüche 1 bis 4, **dadurch gekennzeichnet, daß** an dem Zugglied (94) auf der dem Spannkeil (86) zugewandten Seite ein erweitertes, insbesondere T-förmige Kopfstück (86) vorgesehen ist, und daß ds Kopfstück in eine Nut (100) auf der Oberfläche des Spannkeils (86) eingelegt ist, die an ihrem Ende eine dem Kopfstück entsprechende Erweiterung (102) aufweist.

6. Eckverbinder nach einem der Ansprüche 1 bis 5, **dadurch gekennzeichnet, daß** das Zugglied (94) an seinem der Schweißfläche zugewandten Ende eine Öse (98) aufweist.

## Claims

1. Corner connector for insertion into a mitred hollow section for a door or window, particularly made from plastics material, during connection of two mitred hollow door or window sections, with a shaft (80) which can be pushed into the end of a hollow section and has a substantially rectangular cross-section and a welding surface (82) which closes off the shaft and extends obliquely with respect to the shaft, as well as a clamping wedge (86) which is movable in the longitudinal direction of the shaft and is constructed in such a way that the corner connector can be spread apart by displacement of the clamping wedge in the direction of the welding surface (82), **characterised in that** the clamping wedge (86) lies between the shaft (80) and a cover part (90) of the corner connector, that corresponding oblique surfaces are provided n the clamping wedge on the one hand and on the cover part (90) on the other hand in such a way that a displacement of the clamping wedge (86) relative to the shaft (80) and the cover part (90) in the direction of the welding surface (82) causes a spreading apart of the arrangement consisting of the shaft (80) and cover part (90), and that a tension member (4) which projects beyond the clamping wedge (86) in the direction of the welding surface Is fixed positively on the clamping wedge (86) in such a way that at a predetermined tensile stress the predetermined connection is destroyed by deformation or breaking.

2. Method as claimed in Claim 1, **characterised in that** the clamping wedge (86) and the cover part (90) have corresponding oblique surfaces.

3. Method as claimed in Claim 2, **characterised in that** the corresponding oblique surfaces of the clamping wedge (86) and the cover part (90) have corresponding ratchet profilings (92).

4. Corner connector as claimed in one of Claims 1 to 3, **characterised in that** the end of the tension member (94) facing the welding surface (82) lies in a recess (104) in the welding surface.

5. Corner connector as claimed in one of Claims 1 to 4, **characterised in that** a widened, particularly T-shaped head piece (86) is provided on the tension member (94) on the side facing the clamping wedge (86), and that the head piece is laid in a groove (100) on the surface of the clamping wedge (86) which has at its end a corresponding widened portion (102) corresponding to the head piece.

6. Corner connector as claimed in one of Claims 1 to 5, **characterised in that** the tension member (94) has an eye (98) on its end facing the welding surface.

## Revendications

1. Joint d'angle à placer dans un profilé creux de portes ou fenêtres, découpé en onglet, en particulier en matière plastique soudable, lors de la liaison de deux profilés creux de portes ou fenêtres découpés en onglet, avec une tige (80), pouvant être insérée dans l'extrémité d'un profilé creux, avec une section essentiellement rectangulaire et une surface de soudage (82), orientée inclinée par rapport à la tige et fermant la tige, ainsi qu'avec une clavette de serrage (86), mobile dans le sens longitudinal de la tige, constituée de telle sorte que le joint d'angle peut être écarté par déplacement de la clavette de serrage dans le sens de la surface de soudage (82), **caractérisé en ce que** la clavette de serrage (86) est située entre la tige (80) et une partie de recouvrement (90) du joint d'angle, que des surfaces obliques correspondantes sont prévues sur la clavette de serrage d'une part, ainsi que sur la partie de recouvrement (90) d'autre part, de telle sorte qu'un déplacement de la clavette de serrage (86) par rapport à la tige (80) et à la partie de recouvrement (90) en direction de la surface de soudage (82) provoque un écartement de l'ensemble composé de la tige (80) et de la partie de recouvrement (90) et qu'une barre de traction (94), faisant saillie au-dessus de la clavette de serrage (86), est fixée par complémentarité de forme sur la clavette de serrage (86), dans le sens de la surface de soudage, de telle sorte qu'en cas d'effort de traction prédéfini, la liaison prédéfini est détruite par déformation ou rupture.

2. Procédé selon la revendication 1, **caractérisé en ce que** la clavette de serrage (86) et la partie de recouvrement (90) présentent des surfaces obliques correspondantes.

3. Procédé selon la revendication 2, **caractérisé en ce que** les surfaces obliques correspondantes de la clavette de serrage (86) et de la partie de recouvrement (90) présentent des profilages à cliquet (92) correspondants.

4. Joint d'angle selon l'une des revendications 1 à 3, **caractérisé en ce que** l'extrémité de la barre de traction (94), tournée vers la surface de soudage (82), est située dans un évidement (104) de la surface de soudage.

5. Joint d'angle selon l'une des revendications 1 à 4, **caractérisé en ce qu'**une pièce de tête, en particulier en forme de T (86), est prévue contre la barre de traction (94), sur le côté tourné vers la clavette de serrage (86) et que la pièce de tête est insérée dans une rainure (100) à la surface de la clavette de serrage (86), qui présente à son extrémité une extension (102), correspondant à la pièce de tête.

6. Joint d'angle selon l'une des revendications 1 à 5, **caractérisé en ce que** la barre de traction (94) présente à son extrémité, tournée vers la surface de soudage, un oeillet (98).
